# EUROPEAN PATENT SPECIFICATION

(11) **EP 2 685 679 B1**
(45) Date of publication and mention of the grant of the patent: **12.08.2020**
(21) Application number: 11744262.4
(22) Date of filing: 09.04.2011
(51) Int. Cl.: H04L 29/12, H04L 29/08, G06F 16/27

(54) **METHOD, DEVICE AND SYSTEM FOR SYNCHRONIZING CONTACT INFORMATION**
VERFAHREN, VORRICHTUNG UND SYSTEM ZUR SYNCHRONISIERUNG VON KONTAKTINFORMATIONEN
PROCÉDÉ, DISPOSITIF ET SYSTÈME POUR SYNCHRONISER DES INFORMATIONS CONCERNANT DES CONTACTS

(43) Date of publication of application: 15.01.2014
(73) Proprietor: Huawei Technologies Co., Ltd., Longgang District Shenzhen, Guangdong 518129 (CN)
(72) Inventor: WANG, Hao, Shenzhen Guangdong 518129 (CN)
(74) Representative: Körber, Martin Hans
(86) International application number: PCT/CN2011/072565
(87) International publication number: WO 2011/100904

(56) References cited:
- CN-A- 101 047 665
- CN-A- 101 557 409
- CN-Y- 201 142 742
- "Converged Address Book Architecture ; OMA-AD-CAB-V1_0-20101130-D", OMA-AD-CAB-V1_0-20101130-D, OPEN MOBILE ALLIANCE (OMA), 4330 LA JOLLA VILLAGE DR., SUITE 110 SAN DIEGO, CA 92122 ; USA , no. 1.0 30 November 2010 (2010-11-30), pages 1-22, XP064143267, Retrieved from the Internet: URL:ftp/Public_documents/COM/COM-CAB-M/Per manent_documents/ [retrieved on 2010-11-30]
- "Converged Address Book (CAB) Specification ; OMA-TS-CAB-V1_0-20110225-D", OMA-TS-CAB-V1_0-20110225-D, OPEN MOBILE ALLIANCE (OMA), 4330 LA JOLLA VILLAGE DR., SUITE 110 SAN DIEGO, CA 92122 ; USA , no. 1.0 25 February 2011 (2011-02-25), pages 1-76, XP064143279, Retrieved from the Internet: URL:ftp/Public_documents/COM/COM-CAB-M/Per manent_documents/ [retrieved on 2011-02-25]
- "Dictionary for OMA Specifications ; OMA-ORG-Dictionary-V2_8-20100525-A", OMA-ORG-DICTIONARY-V2_8-20100525-A, OPEN MOBILE ALLIANCE (OMA), 4330 LA JOLLA VILLAGE DR., SUITE 110 SAN DIEGO, CA 92122 ; USA , no. 2.8 25 May 2010 (2010-05-25), pages 1-43, XP064024470, Retrieved from the Internet: URL:ftp/Public_documents/ARCH/Permanent_do cuments/ [retrieved on 2010-05-31]
- "XML Document Management Architecture ; OMA-AD-XDM-V2_1-20101202-C", OMA-AD-XDM-V2_1-20101202-C, OPEN MOBILE ALLIANCE (OMA), 4330 LA JOLLA VILLAGE DR., SUITE 110 SAN DIEGO, CA 92122 ; USA , no. 2.1 2 December 2010 (2010-12-02), pages 1-32, XP064159029, Retrieved from the Internet: URL:ftp/Public_documents/COM/COM-XDM/Perma nent_documents/ [retrieved on 2012-03-19]
- ROSENBERG CISCO J: "The Extensible Markup Language (XML) Configuration Access Protocol (XCAP); rfc4825.txt", 20070501, 1 May 2007 (2007-05-01), XP015052396, ISSN: 0000-0003
- STEFFEN GULLIKSTAD HALLSTEINSEN: "A study of user authentication using mobile phone", MASTER OF SCIENCE IN COMMUNICATION TECHNOLOGY, NORWEGIAN UNIVERSITY OF SCIENCE AND TECHNOLOGY, DEPARTMENT OF TELEMATICS , 1 June 2007 (2007-06-01), pages 1-124, XP002564891, Retrieved from the Internet: URL:http://daim.idi.ntnu.no/masteroppgaver /IME/ITEM/2007/3862/masteroppgave.pdf [retrieved on 2010-01-22]
- "SyncML Representation Protocol, Data Synchronization Usage ; OMA-TS-DS_DataSyncRep-V1_2_2-20090316-D_cb ", OMA-TS-DS_DATASYNCREP-V1_2_2-20090316-D_CB , OPEN MOBILE ALLIANCE (OMA), 4330 LA JOLLA VILLAGE DR., SUITE 110 SAN DIEGO, CA 92122 ; USA, no. 1.2.2, 16 March 2009 (2009-03-16), pages 1-101, XP064124532, [retrieved on 2009-03-16]
- "Converged Address Book Requirements ; OMA-RD-CAB-V1_0-20110310-D", OMA-RD-CAB-V1_0-20110310-D, OPEN MOBILE ALLIANCE (OMA), 4330 LA JOLLA VILLAGE DR., SUITE 110 SAN DIEGO, CA 92122 ; USA , no. 1.0 10 March 2011 (2011-03-10), pages 1-23, XP064143283, Retrieved from the Internet: URL:ftp/Public_documents/COM/COM-CAB-M/Per manent_documents/ [retrieved on 2011-03-10]

## Description

### Field of the Invention

The present invention relates to communication technologies, and more particularly, to a method, an apparatus and a system for synchronizing contact information.

### Background of the Invention

An address book is an information list for recording contact information of contacts. The contact information of contacts, generally, are inputted manually by a user and recorded in a mobile communication terminal or a computer, as an address book for users to look up and use. The address book facilitates communications and connections among persons, and its functions and capacities thereof also become stronger along with the abundance of mobile communication services.

In an enterprise or an organization, in order to facilitate communications among staffs and handling of affairs, a personnel management department of the enterprise generally cooperates with an information management department to gather contact information of the staffs, and to generate an enterprise address book public in the enterprise supplied to the staffs of the enterprise for inquiring and use. To facilitate the work of the staffs, equally opened permission is generally used for information contents accessible to the staffs, and the contact information is maintained by the staffs themselves and opens within the range of the enterprise. As an enterprise address book is an important information resource in an enterprise, the enterprise address book is usually limited to be used only in the enterprise. For example, it is required to access the contents of the enterprise address book only through specific network channels, e.g. within an office network range, or through a network of private virtual connection, or the like, and/or using special terminals, e.g. specialized computers within the office, or terminal devices equipped with specific clients, or the like.

Along with development of mobile internet technologies, demands of users for mobile office are increasing, and it is hoped to carry contact information of contacts been promptly updated with an accompanied terminal, thereby guaranteeing that work may also be performed in mobile state as that in an office environment.

An existing implementation for meeting the demands of users for mobile office is to use a specialized terminal to access a private access server in a mobile operator access network through a virtual private network (VPN: Virtual Private Network) tunnel, to guarantee that a user may also access, in a wireless communication environment, to the internal of an enterprise network and further access an enterprise address book.

By utilizing the above-mentioned manner, a user is enabled to access an enterprise address book during mobile office. However, it is necessary to use a specialized terminal for access, and to construct a private access server in the mobile operator access server, and also to employ a VPN tunnel between the access server and the specialized terminal, leading to a high service cost. Meanwhile, due to the use of the VPN tunnel, high intensity of security encryption measurements need to be used, which, therefore, has certain requirements on application skills of the users, increases use difficulty for users, and might result in inconvenience for the users.

In addition, the document "Converged Address Book Architecture; OMA-AD-CAB-V1_0-20101130-D", OMA-AD-CAB-V1_0-20101130-D, OPEN MOBILE ALLIANCE (OMA), 4330 LA JOLIA VILLAGE DR., SUITE 110 SAN DIEGO, CA 92122; USA, No.1.0; 30 November 2010, page 1-22, XP064143267, describes a decomposed CAB Architecture Diagram. In this architecture, the CAB Client performs synchronization modifications (e.g. add, delete, modify) of a local subset of address book information that is contained in the network-based AB repository. Furthermore, the CAB client communicates via CAB-1 or XDM-3i with the CAB server. The documents "Converged Address Book (CAB) Specification; OMA-TS-CAB-V1_0-20110225-D", OMA-TS-CAB-V1_0-20110225-D, OPEN MOBILE ALLIANCE (OMA), 4330 LA JOLIA VILLAGE DR., SUITE 110 SAN DIEGO, CA 92122; USA, No.1.0; 25 February 2011, page 1 -76, XP064143279 introduces the procedures at CAB server. The technologies of data management and synchronization and XML document management are utilized to fulfill CAB requirements.

Each of documents "Dictionary for OMA Specifications; OMA-ORG-Dictionary-V2_8-20100525-A" (OMA-ORG-Dictionary-V2_8-20100525-A, OPEN MOBILE ALLIANCE (OMA), 4330 LA JOLIA VILLAGE DR., SUITE 110 SAN DIEGO, CA 92122; USA), "XML Document Management Architecture; OMA-AD-XDM-V2_1-20101202-C" (OMA-AD-XDM-V2_1-20101202-C, OPEN MOBILE ALLIANCE (OMA), 4330 LA JOLIA VILLAGE DR., SUITE 110 SAN DIEGO, CA 92122; USA) and "The Extensible Markup Language (XML) Configuration Access Protocol (XCAP); rfc4825.txt" discloses a common CAB Architecture.

The Document "A study of user authentication using mobile phone", Steffen Gullikstad Hallsteinsen, Master of Science in Communication Technology, Norwegian University of Science and Technology, Department of Telematics, generally discusses an authentication method between a user and a system. Accordingly, authentication is begins with registration. The user applies to a Registration Authority (RA) to become a subscriber of a Credential Service Provider (CSP).

### Summary of the Invention

The embodiments of the present invention provide a method for synchronizing contact information and an enterprise address book agent network element, which not only are convenient for use but also have a low service cost.

An embodiment of the present invention provides a method for synchronizing contact information according to independent claim 1.

Another embodiment of the present invention provides an enterprise address book agent network element according to independent claim 8.

Additional features of the invention are provided in the dependent claims. In the following, parts of the description and drawings referring to embodiments which are not covered by the claims are not presented as embodiments of the invention, but as examples useful for understanding the invention.

It may be seen from the above technical solutions provided by the embodiments of the present invention, the enterprise address book agent network element may, after receiving the contact information to be updated from the enterprise address book server, send an updating request to the public address book server through a private channel with the public address book server, such that the public address book server updates the contact information which needs to be updated in a user address book corresponding to the user identification, and the contact information updated in the enterprise address book server is enabled to be updated in the public address book server. As a result, a user may conveniently acquire the updated contact information from the public address book server, and use difficulty for users is reduced; meanwhile, only a private channel between the enterprise address book agent network element and the public address book server needs to be established, i.e., one enterprise only needs one private channel, and service cost is reduced.

### Brief Description of the Drawings

To illustrate the technical solutions in the embodiments of the present invention more clearly, a brief introduction on the accompanying drawings needed in the description of the embodiments is given below. Apparently, the accompanying drawings in the description below are merely some embodiments of the present invention, based on which other drawings may also be obtained by those of ordinary skill in the art without any inventive efforts.
Fig. 1 is a flowchart of a method for synchronizing contact information provided by an embodiment of the present invention;
Fig. 2 is a signalling flowchart of a method for synchronizing contact information provided by another embodiment of the present invention;
Fig. 3 is a signalling flowchart of a method for synchronizing contact information provided by another embodiment of the present invention;
Fig. 4 is a signalling flowchart of a method for synchronizing contact information provided by another embodiment of the present invention;
Fig. 5 is a signalling flowchart of a method for synchronizing contact information provided by another embodiment of the present invention;
Fig. 6 is a structure diagram of an enterprise address book agent network element provided by an embodiment of the present invention;
Fig. 7 is a structure diagram of an enterprise address book agent network element provided by another embodiment of the present invention;
Fig. 8 is a structure diagram of an enterprise address book agent network element provided by another embodiment of the present invention; and
Fig. 9 is a structure diagram of a public address book server provided by an embodiment of the present invention.

### Detailed Description of the Embodiments

The technical solutions in the embodiments of the present invention are described hereinafter clearly and completely, with reference to accompanying drawings in the embodiments of the present invention. Apparently, the described embodiments are only a part, but not all, of the embodiments of the present invention. All of the other embodiments that are obtained by those of ordinary skill in the art based on the embodiments in the invention without any inventive efforts fall into the scope protected by the present invention, which is defined solely by the appended claims.

Along with the development of technology, an operator may also provide a user with a service of storing contact information of contacts on the network, e.g., a network address book service such as the existing personal information management (PIM: Personal Information Management) and so on, wherein no matter what kind of terminal the user uses, the contact information of contacts thereof can be obtained from the network. A network address book service, such as PIM and the like, takes public as serving object and provides a personal information management service, i.e. a public address book service. A client to be used for a network address book service by which an operator provides a service for public, generally, has been integrated in a terminal by a terminal manufacturer, and is provided to users for use along with the purchase of the terminal and presented on the terminal as an existing public service address book. However, functionality of the existing network address book is relatively unitary, and generally maintains information in a vCard format, and a limited amount of information may be stored. Therefore, a converged address book (CAB: Converged Address Book) technology is proposed, in order to provide a public user with a network address book that may be convergently utilized by multiple services and multiple devices. The CAB technology takes public as serving object and also provides a public address book service.

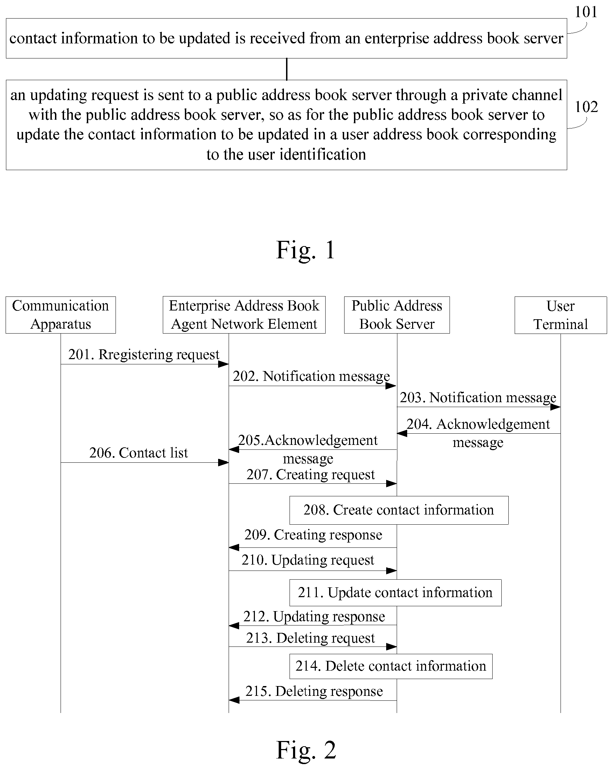

A method for synchronizing contact information provided by an embodiment of the present invention is introduced. Fig. 1 illustrates a flowchart of a method for synchronizing contact information provided by an embodiment of the present invention. The embodiment describes a processing procedure of an enterprise address book agent network element. The enterprise address book agent network element is located in an enterprise network, and it may be an individual device, or may be integrated with an enterprise address book server. The embodiment includes the following steps.

101, contact information to be updated is received from an enterprise address book server.

The contact information that needs to be updated indicates contact information that has been updated on an enterprise address book server, and more specifically, contact information that is different between the enterprise address book and a user address book. As the contact information has been updated on the enterprise address book server, for the purpose of keeping contact information on the enterprise address book and contact information on the user address book synchronized, it is necessary to update the contact information on the user address book. Therefore, whenever the contact information is updated, the enterprise address book server sends the contact information to be updated to the enterprise address book agent network element. For instance, the enterprise address book agent network element may receive the contact information to be updated sent by the enterprise address book server, when contact information is added on the enterprise address book server as a new staff joins, and/or contact information is changed on the enterprise address book server by a staff, and/or contact information is deleted from the enterprise address book server as a staff leaves. The contact information may include one or more of the following information: a mobile phone number of a contact, a stationary phone number of a contact, an email address of a contact, an instant massage (IM: Instant Message) account of a contact, an office position of a contact, and the like.

102, an updating request is sent to a public address book server through a private channel with the public address book server, wherein the updating request includes a pre-stored user identification and the contact information to be updated, and the user identification is an identification of a user in the public address book server, so as for the public address book server to update the contact information to be updated in a user address book corresponding to the user identification.The updating request may specifically be an adding contact request, or a deleting contact request, or a changing contact request, or the like, and it may specifically vary with different update operations.

The private channel between the enterprise address book agent network element and the public address book server may be established through negotiation between an enterprise network manager and a public address book operator, which may specifically be a VPN tunnel, a private link, an optical fiber connection, or the like. Moreover, the public address book operator may assign an identification for the private channel, and all messages sent from the enterprise address book agent network element to the public address book server may include the identification of the private channel, so as for the public address book server to determine, according to the identification of the private channel, that the received massages are from a legitimate resource.

Specifically, the public address book may be based on a PIM technology, a CAB technology, or the like. The embodiments of the present invention do not limit the specific address book technology on which the public address book is based. For instance, when the public address book is based on the CAB technology, it is needed for the private channel to support transferring a message in extensible markup language document management (XDM: XML Document Management) format between the enterprise address book agent network element and the public address book server, wherein the message in XDM format is based on an extensible markup language configuration access protocol (XCAP: XML Configuration Access Protocol).

In one embodiment of the present invention, the enterprise address book agent network element may adopt the following procedure to register a user identification: receiving a registering request including the user identification, wherein the registering request may be sent by a user; sending a notification message to a terminal of the user via the public address book server; and marking the user identification as registered if an acknowledgement message returned from the terminal of the user is received.

The notification message sent by the enterprise address book agent network element via the public address book server may be a short message or a message that is identifiable to other terminals. Specifically, the enterprise address book agent network element may send a message to the public address book server, wherein the message carries a user identification. If a corresponding user address book is found according to the user identification, the public address book server sends a notification message to a terminal of the user. As the user actually has already been a user of the public address book server, the user has already registered his terminal in use on the public address book server in advance. Consequently, the public address book server may send the notification message to the registered terminal corresponding to the user identification. After receiving the notification message through the terminal, the user may send an acknowledgement message to the enterprise address book agent network element, and more specifically, the user may directly send the acknowledgement message to the enterprise address book agent network element, or send the acknowledgement message to the enterprise address book agent network element via the public address book server. After receiving the acknowledgement message, the enterprise address book agent network element may confirm that a corresponding user address book can be found in the public address book server for the user identification provided by the user, and thereby confirming the validity of the user identification and storing the user identification in a memory.

As can be known from the foregoing, in the present embodiment, after receiving the contact information to be updated from the enterprise address book server, the enterprise address book agent network element may send an updating request to the public address book server through a private channel with the public address book server, so as for the public address book server to update the contact information to be updated in a user address book corresponding to the user identification, and the contact information updated in the enterprise address book server is enabled to be updated in the public address book server. As a result, a user may conveniently acquire the updated contact information from the public address book server, and use difficulty for users is reduced; meanwhile, only a private channel between the enterprise address book agent network element and the public address book server needs to be established, i.e., one enterprise only needs one private channel, and service cost is reduced.

In a method for synchronizing contact information provided by another embodiment of the present invention, after being registered in the enterprise address book agent network element, the user may further set a contact list, wherein the contact list includes identifications of contacts needed by the user, and the enterprise address book agent network element may send an updating request to the public address book server only when the contact information of the contacts in the contact list has been updated. Certainly, the enterprise address book agent network element may also set a default list, thereby an updating request is sent to the public address book server only when the contact information of the contacts in the default list has been updated. The default list may be determined according to a department and/or a post of the user in the enterprise, and users in different departments and/or on different posts may have different default lists. Specifically, when the enterprise address book agent network element receives the contact information to be updated from the enterprise address book server, the enterprise address book agent network element may determine whether the contact information to be updated corresponds to a contact in the contact list and/or the default list, that is to say, determine whether or not the contact information to be updated is a contact in the contact list and/or the default list. Thereby the updating request is sent to the public address book server through the private channel only when the updated contact information corresponds to a contact in the contact list and/or the default list. Thus, an amount of contact information to be synchronized between the enterprise address book agent network element and the public address book server is reduced, and a risk of leaking internal information of an enterprise is reduced.

In a method for synchronizing contact information provided by another embodiment of the present invention, after storing the user identification, the enterprise address book agent network element may send an creating request to the public address book server through the private channel, wherein the creating request includes the user identification and contact information to be created, so as for the public address book server to create the contact information to be created in a user address book corresponding to the user identification. As the enterprise address book agent network element has just stored the user identification, i.e., the user has just been registered in the enterprise address book agent network element, the user address book of the user on the public address book server has not included the contact information in the enterprise address book yet. Therefore, in order to keep synchronization between the enterprise address book and the user address book, an creating request needs to be sent to the public address book server. When the enterprise address book agent network element does not store a default list and/or a contact list set by the user, the contact information to be created in the creating request may be all of the contact information in the enterprise address book. When the enterprise address book agent network element has stored the default list and/or the contact list set by the user, the contact information to be created in the creating request may be contact information of the contacts in the default list and/or the contact list set by the user.

In a method for synchronizing contact information provided by another embodiment of the present invention, the public address book operator assigns an identification for the private channel. When the enterprise address book agent network element sends the updating request and the creating request, the identification of the private channel may be further carried in the updating request and the creating request, such that the public address book server can determine a source of the received updating request and creating request, and security of the public address book may also be improved. Further, when the public address book server creates or updates contact information in the user address book, the created contact information or the updated contact information may further be marked with the identification of the private channel. When the enterprise address book agent network element sends a data deleting request to the public address book server, the user identification and the identification of the private channel may be carried in the data deleting request. As a result, when receiving a data deleting request including the identification of the private channel, the public address book server may directly delete, according to the identification of the private channel, all of the contact information marked with the identification of the private channel in the user address book, thereby increasing deleting efficiency and also reducing an amount of data to be carried in a data deleting request.

Fig. 2 is a signalling flowchart of a method for synchronizing contact information provided by another embodiment of the present invention, including the following steps.

201, a user sends a registering request to an enterprise address book agent network element via a communication apparatus that may communicate with the enterprise address book agent network element, wherein the registering request includes a user identification of the user in a public address book server.

The communication apparatus that may communicate with the enterprise address book agent network element may specifically be a personal computer (PC: Personal Computer) within an enterprise, a specific client, and so forth.

202, the enterprise address book agent network element sends a notification message to the public address book server through a private channel, wherein the notification message includes the user identification.

The enterprise address book agent network element searches for a user address book according to the user identification. If a user address book corresponding to the user identification is found, the user identification is valid. Alternatively, when information of a registered user is stored in the public address book server, it may also be determined, according to the user identification, whether the user corresponding to the user identification has been registered. If the user has been registered, the user identification is valid.

203, the public address book server sends a notification message to a user terminal corresponding to the user identification.

The public address book server stores information of a terminal registered with the user identification. There may be a plurality of terminals which may also be of various kinds.

When the terminal is a mobile phone, the sent notification message may be a short message. When the terminal is a session initiation protocol (SIP: Session Initiation Protocol) terminal, the sent notification message may be a SIP message. In case of other terminals, the sent notification message may be a message recognizable to the other terminals. The embodiments of the present invention set no limitation to the sent notification message.

204, the user terminal sends an acknowledgement message to the public address book server.

205, the public address book server forwards the acknowledgement message to the enterprise address book agent network element.

206, the user registers a contact list in the enterprise address book agent network element via the communication apparatus.

207, the enterprise address book agent network element sends, after acquiring contact information of contacts in the contact list from the enterprise address book server, a creating request to the public address book server, wherein the creating request includes the identification of the private channel, the user identification and the contact information of contacts in the contact list.

208, the public address book server creates the contact information in a user address book corresponding to the user identification, and marks the created contact information with the identification of the private channel.

209, the public address book server sends a creating response to the enterprise address book agent network element.

210, the enterprise address book agent network element sends, when it receives contact information to be updated from the enterprise address book server and determines that the contact information to be updated corresponds to a contact in the contact list, an updating request to the public address book server, wherein the updating request includes the identification of the private channel, the user identification and the contact information to be updated.

According to different updating operations, the updating request may be marked to indicate the updating request as for adding contact information, changing contact information or deleting contact information. Certainly, different updating requests may also be sent according to different updating operations. For instance, when the updated contact information is newly added contact information, the sent updating request may be an adding contact request; when the updated contact information is changed contact information, the sent updating request may be a changing contact request; and when the updated contact information is deleted contact information, the sent updating request may be a deleting contact request.

211, the public address book server updates the contact information that needs to be updated in a user address book corresponding to the user identification, and marks the contact information updated with the identification of the private channel.

212, the public address book server sends an updating response to the enterprise address book agent network element.

213, the enterprise address book agent network element sends a data deleting request to the public address book server when the user does not need to store contact information on the enterprise address book at the public address book server, or when the user has already lost access permission to the contact information on the enterprise address book, wherein the data deleting request includes the identification of the private channel and the user identification.

A user has no access permission to contact information on an enterprise address book in case that the user leaves the enterprise, or in case of an enterprise limitation, or the like.

214, the public address book server deletes all contact information marked with the identification of the private channel in a user address book corresponding to the user identification.

215, the public address book server sends a data deleting response to the enterprise address book agent network element.

It should be appreciated that the public address book server may also not send one or more of the creating response, the updating response and the data deleting response to the enterprise address book agent network element.

As can be known from the foregoing, in the present embodiment, after receiving the contact information to be updated from the enterprise address book server, the enterprise address book agent network element may send an updating request to the public address book server through a private channel with the public address book server, so as for the public address book server to update the contact information to be updated in a user address book corresponding to the user identification, and the contact information updated in the enterprise address book server may be enabled to be updated in the public address book server. As a result, a user may conveniently acquire the updated contact information from the public address book server, and use difficulty for users is reduced. Meanwhile, only a private channel between the enterprise address book agent network element and the public address book server needs to be established, i.e., one enterprise only needs one private channel, and service cost is reduced. Also, when receiving contact information to be updated from the enterprise address book server, the enterprise address book agent network element may determine whether or not the contact information to be updated corresponds to a contact in a contact list, thereby an updating request is sent only when the contact information to be updated corresponds to a contact in the contact list. Thereby an amount of contact information to be synchronized is reduced, and a risk of leaking internal information of an enterprise is reduced. Further, when receiving a data deleting request including the identification of the private channel, the public address book server may directly delete, according to the identification of the private channel, all of the contact information marked with the identification of the private channel in the user address book, thereby increasing deleting efficiency and also reducing an amount of data to be carried in the data deleting request.

The embodiments of the present invention are illustrated hereinafter by taking the public address book based on the CAB technology as an example.

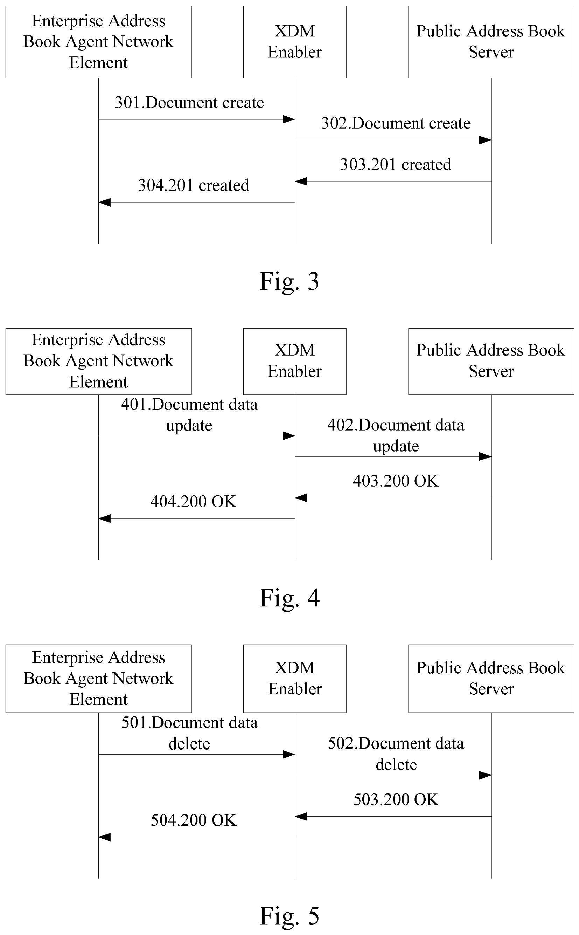

Fig. 3 illustrates a signalling flowchart of a method for synchronizing contact information provided by another embodiment of the present invention. The embodiment illustrates a procedure of an enterprise address book agent network element adding contact information to a user address book of a user in a public address book server. As depicted in Fig. 3, the procedure includes the following steps.

301, the enterprise address book agent network element sends an adding contact request to the public address book server through an extensible markup language document management - 3i (XDM-3i: XML Document Management -3i) interface to request for creating a document. In the present embodiment, the adding contact request may be a document create (Document Create) request, and specifically, the document create request may be implemented by using a PUT command of a hypertext transfer protocol (HTTP: Hypertext Transfer Protocol).

When an extensible markup language document management enabler (XDM Enabler) is set in the public address book server, all messages sent to the public address book server will go through the XDM Enabler, that is to say, messages received by the public address book server directly come from the XDM Enabler. The XDM Enabler may include different functional network elements according to different networks it is located in. For instance, it may include an aggregation proxy (Aggregation Proxy) functional network element, and/or a cross-network proxy (Cross-Network Proxy) and the like. In this case, the private channel between the enterprise address book agent network element and the public address book server is a private channel between the enterprise address book agent network element and the XDM Enabler.

A communication interface of the XDM Enabler opened to the enterprise address book agent network element may be a XDM-3i interface. Therefore, the enterprise address book agent network element may communicate with the XDM Enabler through the XDM-3i interface, such as transceiving of messages and so on. A communication interface of the public address book server opened to the XDM Enabler may be a XDM-4i interface. Therefore, the XDM Enabler may communicate with the public address book server through the XDM-4i interface, such as transceiving of messages and so on.

The contact information to be added, carried in the Document Create request, may employ an extensible markup language (XML: eXtensible Markup Language) command, and an XML command provided in an embodiment of the present invention is shown as follows.

```
 PUT /org.openmobilealliance.cab-user-prefs/users/sip:joebloggs@example.com/index HTTP/1.1
 Host: xcap.example.com
 Content-Type: application/vnd.oma.cab-user-prefs+xml; charset="utf-8"
 Content-Length: (...)
 <?xml version="1.0" encoding="UTF-8"?>
 <cab-user-prefs xmlns="urn:oma:xml:cab:cab-user-prefs">
 <FFS name="X">
           <ABC> </ABC
 </FFS>
 </ cab-user-prefs >
```

What the XML command describes is to add contact information for a user in the example.com domain, and specifically, for a user whose user identification, (i.e., XUI) is sip:joebloggs@example.com, wherein the added contact information is an FFS element, and the FFS element includes an ABC sub-element. As described by the XML command, that is to say, a contact X is added and contact detail sub-element of X is ABC, and the content of the sub-element is blank in the above-mentioned embodiment.

302, after receiving the Document Create request through the XDM-3i interface, the XDM-Enabler forwards the Document Create request to the public address book server through the XDM-4i interface.

303, the public address book server receives the Document Create request forwarded by the XDM Enabler through the XDM-4i interface, creates a contact information file FFS in a user address book corresponding to sip:joebloggs@example.com, and then sends an adding contact response through the XDM-4i interface, wherein the adding contact response may specifically be a 201 Created message to indicate that the contact information has been added successfully.

304, the XDM Enabler forwards the 201 Created message to the enterprise address book agent network element through the XDM-3i interface after receiving the 201 Created message through the XDM-4i interface.

As can be known from the foregoing, in the present embodiment, after receiving the added contact information from the enterprise address book server, the enterprise address book agent network element may send an adding contact request to the public address book server through a private channel with the public address book server, so as for the public address book server to add the contact information in a user address book corresponding to the user identification, and the contact information added in the enterprise address book server is enabled to be added in the public address book server. Consequently, a user may conveniently acquire the added contact information from the public address book server, and use difficulty for users is reduced; meanwhile, only a private channel between the enterprise address book agent network element and the public address book server needs to be established, i.e., one enterprise only needs one private channel, and service cost is reduced.

Fig. 4 describes a signalling flowchart of a method for synchronizing contact information provided by another embodiment of the present invention. The embodiment describes a procedure of an enterprise address book agent network element changing contact information for a user address book of a user in a public address book server. As depicted in Fig. 4, the procedure includes the following steps.

401, the enterprise address book agent network element sends an updating contact request to the public address book server through a XDM-3i interface to request for performing document data update. In the present embodiment, the updating contact request may be a document data update (Document data update) request, and specifically, the document data updating request may be implemented by using a PUT command of HTTP.

The contact information to be changed carried in the Document data updating request may employ an XML command, and an XML command provided in an embodiment of the present invention is shown as follows.

```
 PUT/org.openmobilealliance.cab-user-prefs/users/sip:joebloggs@example.com/index/∼∼/cab-
 user-prefs /FFS5B@name=%22X%22%5D/ABC5B@=%22YZW%22%5D HTTP/1.1
 Host: xcap.example.com
 Content-Type: application/xcap-el+xml; charset="utf-8"
 Content-Length: (...)
 <ABC="YWZ"></ABC
```

What the XML command describes is to change contact information for a user in the example.com domain, and specifically, for a user whose user identification, (i.e., XUI) is sip:joebloggs@example.com, and more particularly, to change ABC sub-element in the FFS element into YWZ.

402, the XDM-Enabler forwards the Document data updating request to the public address book server through the XDM-4i interface after receiving the Document data updating request through the XDM-3i interface.

403, the public address book server receives the Document data update request forwarded by the XDM Enabler through the XDM-4i interface, changes a contact information file FFS in a user address book corresponding to sip:joebloggs@example.com, and more specifically, changes a value of ABC sub-element into YWZ, and then sends an updating contact response through the XDM-4i interface, wherein the changing contact response may specifically be a 200 OK message to indicate that the contact information has been changed successfully.

404, the XDM Enabler forwards the 200 OK message to the enterprise address book agent network element through the XDM-3i interface after receiving the 200 OK message through the XDM-4i interface.

As can be known from the foregoing, in the present embodiment, after receiving the changed contact information from the enterprise address book server, the enterprise address book agent network element may send a changing contact request to the public address book server through a private channel with the public address book server, so as for the public address book server to change the contact information in a user address book corresponding to the user identification, and the contact information changed in the enterprise address book server is enabled to be changed in the public address book server. Consequently, a user may conveniently acquire the changed contact information from the public address book server, and use difficulty for users is reduced; meanwhile, only a private channel between the enterprise address book agent network element and the public address book server needs to be established, i.e., one enterprise only needs one private channel, and service cost is reduced.

Fig. 5 describes a signalling flowchart of a method for synchronizing contact information provided by another embodiment of the present invention. The embodiment describes a procedure of an enterprise address book agent network element deleting contact information for a user address book of a user in a public address book server. As depicted in Fig. 5, the procedure includes the following steps.

501, the enterprise address book agent network element sends a deleting contact request to the public address book server through an XDM-3i interface to request for performing document data delete. In the present embodiment, the deleting contact request may be a document data delete (Document data delete) request, and specifically, the document data delete request may be implemented by using a DELETE command of HTTP.

The contact information to be deleted carried in the Document data delete request may employ an XML command, and an XML command provided in an embodiment of the present invention is shown as follows.

```
 DELETE /org.openmobilealliance.cab-user-prefs/users/sip:joebloggs@example.com/index/∼∼/cab-
 user-prefs/ FFS%5B@name=%22X%22%5D/ABC%5B@=%YZW%22%5D HTTP/1.1
 Host: xcap.example.com
```

What the XML command describes is to delete contact information for a user in example.com domain, and specifically, for a user whose user identification, (i.e., XUI) is sip:joebloggs@example.com, wherein the deleted contact information is FFS element, and more particularly, to delete FFS element including an ABC sub-element whose value is YZW.

502, the XDM-Enabler forwards the Document data delete request to the public address book server through the XDM-4i interface after receiving the Document data delete request through the XDM-3i interface.

503, the public address book server receives the Document data delete request forwarded by the XDM Enabler through the XDM-4i interface, deletes a value YZW of the ABC sub-element in the contact information file FFS in a user address book corresponding to sip:joebloggs@example.com, and then sends a deleting contact response through the XDM-4i interface, wherein the deleting contact response may specifically be a 200 OK message to indicate that the contact information has been deleted successfully.

504, the XDM Enabler forwards the 200 OK message to the enterprise address book agent network element through the XDM-3i interface after receiving the 200 OK message through the XDM-4i interface.

As can be known from the foregoing, in the present embodiment, after receiving the deleted contact information from the enterprise address book server, the enterprise address book agent network element may send a deleting contact request to the public address book server through a private channel with the public address book server, so as for the public address book server to delete the contact information in a user address book corresponding to the user identification, and the contact information deleted in the enterprise address book server is enabled to be deleted in the public address book server. Consequently, a user may conveniently acquire the deleted contact information from the public address book server, and use difficulty for users is reduced; meanwhile, only a private channel between the enterprise address book agent network element and the public address book server needs to be established, i.e., one enterprise only needs one private channel, and service cost is reduced.

It should be mentioned that for purpose of simplicity of the description, the preceding respective embodiments of a method are described as combinations of a series of acts, while it should be known to those skilled in the art that the present invention is not limited by the order of acts, as some steps, according to the present invention, may be executed in other orders or concurrently. In addition, it should be also known to those skilled in the art that the embodiments described in the description are preferable ones, and the involved acts and modules thereof are not definitely indispensable in the present invention.

An enterprise address book agent network element provided by an embodiment of the present invention is illustrated hereinafter. The enterprise address book agent network element provided by the embodiment of the present invention may be an individual apparatus, and may also be integrated together with an enterprise address book server.

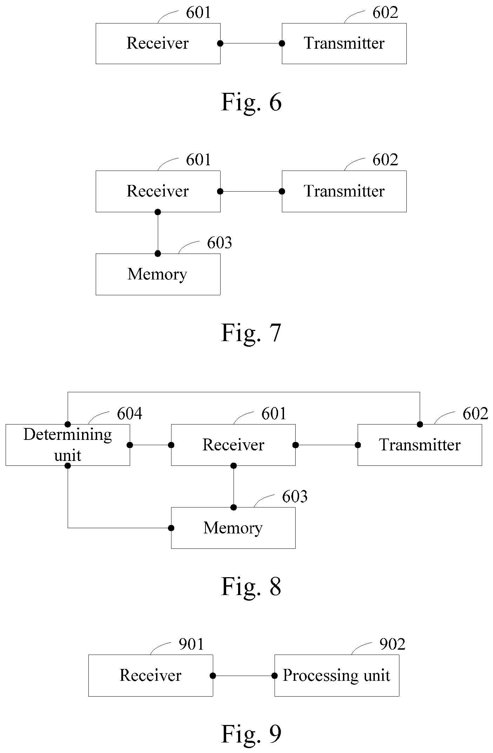

Fig. 6 describes a structure of an enterprise address book agent network element provided by an embodiment of the present invention, including:
a receiver 601, configured to receive, from an enterprise address book server, contact information to be updated; and
a transmitter 602, configured to send, after the receiver 601 receives the contact information to be updated, an updating request to a public address book server through a private channel with the public address book server, wherein the updating request includes a pre-stored user identification and the contact information to be updated, and the user identification is an identification of the user in the public address book server, so as for the public address book server to update the contact information to be updated in a user address book corresponding to the user identification.

When the user address book in the public address book server is based on a CAB technology, the transmitter 602 may specifically send the updating request to the public address book server through an XDM-3i interface, and certainly, all messages sent from the transmitter 602 to the public address book server may be sent through the XDM-3i interface.

As can be known from the foregoing, in the present embodiment, after receiving the contact information to be updated from the enterprise address book server, the enterprise address book agent network element may send an updating request to the public address book server through a private channel with the public address book server, such that the public address book server updates the contact information to be updated in a user address book corresponding to the user identification, and the contact information updated in the enterprise address book server is enabled to be updated in the public address book server. As a result, a user may conveniently acquire the updated contact information from the public address book server, and use difficulty for users is reduced; meanwhile, only a private channel between the enterprise address book agent network element and the public address book server needs to be established, i.e., one enterprise only needs one private channel, and service cost is reduced.

Fig. 7 describes a structure of an enterprise address book agent network element provided by another embodiment of the present invention, including:
a receiver 601, configured to receive a registering request including a user identification, and receive an acknowledgement message returned from a terminal of a user; and further configured to receive contact information to be updated from an enterprise address book server;
a memory 603, configured to store the user identification after the receiver 601 receives the acknowledgement message; and
a transmitter 602, configured to send a notification message to the terminal of the user via a public address book server after the receiver 601 receives the registering request; and further configured to send, after the receiver 601 receives the contact information to be updated, an updating request to the public address book server through a private channel with the public address book server, wherein the updating request includes the contact information to be updated and the user identification stored by the memory 603, and the user identification is an identification of the user in the public address book server, so as for the public address book server to update the contact information to be updated in a user address book corresponding to the user identification.

When the user address book in the public address book server is based on a CAB technology, the transmitter 602 may specifically send the updating request to the public address book server through an XDM-3i interface, and certainly, all messages sent from the transmitter 602 to the public address book server may be sent through the XDM-3i interface.

As can be known from the foregoing, in the present embodiment, after receiving the contact information to be updated from the enterprise address book server, the enterprise address book agent network element may send an updating request to the public address book server through a private channel with the public address book server, such that the public address book server updates the contact information to be updated in a user address book corresponding to the user identification, and the contact information updated in the enterprise address book server is enabled to be updated in the public address book server. As a result, a user may conveniently acquire the updated contact information from the public address book server, and use difficulty for users is reduced; meanwhile, only a private channel between the enterprise address book agent network element and the public address book server needs to be established, i.e., one enterprise only needs one private channel, and service cost is reduced.

Fig. 8 describes a structure of an enterprise address book agent network element provided by another embodiment of the present invention, including:
a receiver 601, configured to receive a registering request including a user identification, and receive an acknowledgement message returned from a terminal of a user; and further configured to receive contact information to be updated from an enterprise address book server;
a memory 603, configured to store the user identification after the receiver 601 receives the acknowledgement message; and further configured to store a contact list registered by the user;
a determining unit 604, configured to determine whether the contact information to be updated received by the receiver 601 corresponds to a contact in the contact list stored by the memory 603; and
a transmitter 602, configured to send a notification message to the terminal of the user via a public address book server after the receiver 601 receives the registering request; and further configured to send, when the determining unit 604 determines that the contact information to be updated corresponds to a contact in the contact list stored by a memory, an updating request to the public address book server through a private channel with the public address book server, wherein the updating request includes the contact information to be updated and the user identification stored by the memory 603, and the user identification is an identification of the user in the public address book server, so as for the public address book server to update the contact information to be updated in a user address book corresponding to the user identification.

When the public address book in the public address book server is based on a CAB technology, the transmitter 602 may specifically send the updating request to the public address book server through an XDM-3i interface, and certainly, all messages sent from the transmitter 602 to the public address book server may be sent through the XDM-3i interface.

It can be known from the foregoing that in the present embodiment, after receiving the contact information to be updated from the enterprise address book server, the enterprise address book agent network element may send an updating request to the public address book server through a private channel with the public address book server, such that the public address book server updates the contact information to be updated in a user address book corresponding to the user identification, and the contact information updated in the enterprise address book server may be enabled to be updated in the public address book server. As a result, a user may conveniently acquire the updated contact information from the public address book server, and use difficulty for users is reduced; meanwhile, only a private channel between the enterprise address book agent network element and the public address book server needs to be established, i.e., one enterprise only needs one private channel, and service cost is reduced.

In an enterprise address book agent network element provided by another embodiment of the present invention, the transmitter 602 is further configured to send, after the memory 603 stores the user identification, a creating request to the public address book server through the private channel, wherein the creating request includes the user identification and contact information to be created, so as for the public address book server to create the contact information to be created in a user address book corresponding to the user identification.

In an enterprise address book agent network element provided by another embodiment of the present invention, the creating request sent by the transmitter 602 further includes an identification of the private channel; and the sent updating request may also include the identification of the private channel. In addition, in another embodiment of the present invention, the transmitter 602 is further configured to send a data deleting request to the public address book server through the private channel, wherein the data deleting request includes the user identification and the identification of the private channel, so as for the public address book server to delete contact information marked with the identification of the private channel in the user address book.

A public address book server provided by the embodiments of the present invention is further illustrated. Fig. 9 describes a structure of a public address book server provided by an embodiment of the present invention, including the following modules.

A receiver 901 is configured to receive an updating request from a private channel with an enterprise address book agent network element, wherein the updating request includes a user identification and contact information to be updated.

When a user address book in the public address book server is based on a CAB technology, the receiver 901 may specifically receive the updating request through an XDM-4i interface, and certainly, all messages from the enterprise address book agent network element received by the receiver 901 may be received through the XDM-4i interface.

A processing unit 902 is configured to update the contact information to be updated in a user address book corresponding to the user identification received by the receiver 901.

As can be known from the foregoing, in the present embodiment, after receiving the changed contact information from the enterprise address book server, the enterprise address book agent network element may send a changing contact request to the public address book server through a private channel with the public address book server, such that the public address book server changes the contact information in a user address book corresponding to the user identification, and the contact information changed in the enterprise address book server is enabled to be changed in the public address book server. Consequently, a user may conveniently acquire the changed contact information from the public address book server, and use difficulty for users is reduced; meanwhile, only a private channel between the enterprise address book agent network element and the public address book server needs to be established, i.e., one enterprise only needs one private channel, and service cost is reduced.

In a public address book server provided by another embodiment of the present invention, the receiver 901 is further configured to receive a creating request from the private channel, wherein the creating request includes the user identification and contact information to be created; and accordingly, the processing unit 902 is further configured to create the contact information to be created in a user address book corresponding to the user identification.

In a public address book server provided by another embodiment of the present invention, the creating request received by the receiver 901 may further include an identification of the private channel. Accordingly, the processing unit 902 is further configured to mark the contact information to be created with the identification of the private channel in a user address book corresponding to the user identification.

In a public address book server provided by another embodiment of the present invention, the updating request received by the receiver 901 may further include an identification of the private channel. Accordingly, the processing unit 902 is further configured to mark the updated contact information with the identification of the private channel in a user address book corresponding to the user identification. In a public address book server provided by another embodiment of the present invention, the receiver 901 is further configured to receive a data deleting request from the private channel, wherein the data deleting request includes the user identification and the identification of the private channel. Accordingly, the processing unit 902 is further configured to delete contact information marked with the identification of the private channel in a user address book corresponding to the user identification.

The embodiments of the present invention also provides a contact synchronization system, wherein the contact synchronization system includes a enterprise address book agent network element provided by the embodiments of the present invention; and/or includes a public address book server provided by the embodiments of the present invention.

As the above-mentioned apparatus and contents between the respective modules in the system, such as information exchange, executing process and the like, are based on a same conception with the embodiments of a method of the present invention, the specific contents may be referred to the description in the embodiments of the method of the present invention, and will not be described redundantly herein.

It should be appreciated for those of ordinary skill in the art that all or part of the procedures in the embodiments of a method mentioned above may be implemented with a computer program instructing corresponding hardware. The above-mentioned program may be stored in a computer readable storage medium. The procedures of the embodiments of the respective methods mentioned above may be included when the program is executed. The above-mentioned storage medium may be a magnetic disk, an optical disk, a read-only memory (ROM: Read-Only Memory), a random access memory (RAM: Random Access Memory) or the like.

The principles and implementations of the present invention are illustrated by utilizing specific examples herein, and the description on the above-mentioned embodiments is only for helping to understand the methodology of the present invention and the conception thereof. Meanwhile, based on the conception of the present invention, changes will be made on either the specific implementations or the application scopes by those of ordinary skill in the art. Above all, the content of the description shall not be understood as limitation on the present invention. The scope of the invention is defined by the appended claims.

## Claims

1. A method for synchronizing contact information, comprising:
receiving (101), by an enterprise address book agent network element, from an enterprise address book server, contact information to be updated, wherein the enterprise address book server and the enterprise address book agent network element are located in an enterprise network;
sending (102), by the enterprise address book agent network element, an updating request to a public address book server through a private channel with the public address book server, wherein the public address book server is available in a public network, wherein the updating request comprises an identification of the private channel, a pre-stored user identification and the contact information to be updated, wherein the identification of the private channel, which is assigned by a public address book operator, is used to determine a source of the updating request, and the user identification is an identification of a user in the public address book server, so as for the public address book server to update the contact information to be updated in a user address book corresponding to the user identification, in order to allow a user in the public network to acquire the contact information of the enterprise address book server from the public address book server.

2. The method for synchronizing contact information of claim 1, wherein when updating the contact information to be updated, the public address book server further marks the updated contact information with the identification of the private channel in the user address book.

3. The method for synchronizing contact information of claim 1, wherein the user identification is stored by:
receiving a registering request comprising the user identification;
sending a notification message to a terminal of the user via the public address book server; and
storing the user identification if an acknowledgment message returned from the terminal of the user is received.

4. The method for synchronizing contact information of claim 3, after the user identification is stored, further comprising:
sending a creating request to the public address book server through the private channel, wherein the creating request comprises the user identification and contact information to be created, so as for the public address book server to create the contact information to be created in the user address book.

5. The method for synchronizing contact information of claim 4, wherein the creating request further comprises the identification of the private channel; and when creating the contact information to be created, the public address book server further marks the contact information to be created with the identification of the private channel in the user address book.

6. The method for synchronizing contact information of claim 2 or 5, further comprising:
sending a data deleting request to the public address book server through the private channel, wherein the data deleting request comprises the user identification and the identification of the private channel, so as for the public address book server to delete contact information marked with the identification of the private channel in the user address book.

7. The method for synchronizing contact information of any one of claims 1 to 5, further comprising storing a contact list registered by the user; and
after receiving (101) updated contact information from an enterprise address book, further comprising:
determining whether the updated contact information corresponds to a contact in the contact list; and
sending the updating request to the public address book server if yes.

8. An enterprise address book agent network element, the enterprise address book agent network element being an individual device located in an enterprise network or is integrated with an enterprise address book server, comprising:
a receiver (601), configured to receive, from the enterprise address book server, contact information to be updated, wherein the enterprise address book server is available in an enterprise network;
a transmitter (602), configured to send, after the receiver receives the contact information to be updated, an updating request to a public address book server through a private channel with the public address book server, wherein the public address book server is available in a public network, wherein the updating request comprises an identification of the private channel, a pre-stored user identification and the contact information to be updated, wherein the identification of the private channel, which is assigned by a public address book operator, is used to determine a source of the updating request, and the user identification is an identification of the user in the public address book server, so as for the public address book server to update the contact information to be updated in a user address book corresponding to the user identification, in order to allow a user in the public network to acquire the contact information of the enterprise address book server from the public address book server.

9. The enterprise address book agent network element of claim 8, further comprising a memory (603), wherein
the receiver (601) is further configured to receive a registering request comprising the user identification, and to receive an acknowledgement message returned from a terminal of the user;
the transmitter (602) is further configured to send a notification message to the terminal of the user via the public address book server after the receiver receives the registering request; and
the memory (603) is configured to store the user identification after the receiver receives the acknowledgement message.

10. The enterprise address book agent network element of claim 9, further comprising a determining unit (604); wherein
the memory (603) is further configured to store a contact list registered by the user;
the determining unit (604) is configured to determine whether the contact information to be updated corresponds to a contact in the contact list stored by the memory; and
the transmitter (602) is configured to send the updating request to the public address book server when the determining unit (604) determines that the contact information to be updated corresponds to a contact in the contact list stored by the memory.

11. The enterprise address book agent network element of claim 9, wherein the transmitter (602) is further configured to send, after the memory stores the user identification, a creating request to the public address book server through the private channel, the creating request comprising the user identification and contact information to be created, so as for the public address book server to create the contact information to be created in the user address book.

12. The enterprise address book agent network element of claim 11, wherein the creating request sent by the transmitter (602) further comprises the identification of the private channel.

13. The enterprise address book agent network element of claim 12, wherein the transmitter (602) is further configured to send a data deleting request to the public address book server through the private channel, the data deleting request comprising the user identification and the identification of the private channel, so as for the public address book server to delete contact information marked with the identification of the private channel in the user address book.

## Patentansprüche

1. Verfahren zum Synchronisieren von Kontaktinformationen, umfassend:
Empfangen (101) von zu aktualisierenden Kontaktinformationen durch ein Unternehmens-Adressbuchagent-Netzwerkelement von einem Unternehmens-Adressbuchserver, wobei sich der Unternehmens-Adressbuchserver und das Unternehmens-Adressbuchagent-Netzwerkelement in einem Unternehmensnetzwerk befinden;
Senden (102) einer Aktualisierungsanforderung durch das Unternehmens-Adressbuchagent-Netzwerkelement zu einem öffentlichen Adressbuchserver durch einen privaten Kanal mit dem öffentlichen Adressbuchserver, wobei der öffentliche Adressbuchserver in einem öffentlichen Netzwerk verfügbar ist, wobei die Aktualisierungsanforderung eine Identifikation des privaten Kanals, eine vorgespeicherte Benutzeridentifikation und die zu aktualisierenden Kontaktinformationen umfasst, wobei die Identifikation des privaten Kanals, die durch einen öffentlichen Adressbuchbetreiber vergeben wird, zur Bestimmung einer Quelle der Aktualisierungsanforderung verwendet wird und die Benutzeridentifikation eine Identifikation eines Benutzers in dem öffentlichen Adressbuchserver ist, damit der öffentliche Adressbuchserver somit die zu aktualisierenden Kontaktinformationen in einem der Benutzeridentifikation entsprechenden Benutzeradressbuch aktualisiert, um es einem Benutzer in dem öffentlichen Netzwerk zu erlauben, die Kontaktinformationen des Unternehmens-Adressbuchservers von dem öffentlichen Adressbuchserver zu beschaffen.

2. Verfahren zum Synchronisieren von Kontaktinformationen nach Anspruch 1, wobei beim Aktualisieren der zu aktualisierenden Kontaktinformationen der öffentliche Adressbuchserver ferner die aktualisierten Kontaktinformationen mit der Identifikation des privaten Kanals in dem Benutzeradressbuch markiert.

3. Verfahren zum Synchronisieren von Kontaktinformationen nach Anspruch 1, wobei die Benutzeridentifikation gespeichert wird durch
Empfangen eines die Benutzeridentifikation umfassenden Registrieranforderung; Senden einer Benachrichtigungsnachricht zu dem Endgerät des Benutzers über den öffentlichen Adressbuchserver; und
Speichern der Benutzeridentifikation, wenn eine von dem Endgerät des Benutzers zurückgegebene Bestätigungsnachricht empfangen wird.

4. Verfahren zum Synchronisieren von Kontaktinformationen nach Anspruch 3, das nachdem die Benutzeridentifikation gespeichert ist, ferner Folgendes umfasst:
Senden einer Erzeugungsanforderung zu dem öffentlichen Adressbuchserver durch den privaten Kanal, wobei die Erzeugungsanforderung die Benutzeridentifikation und zu erzeugende Kontaktinformationen umfasst, damit der öffentliche Adressbuchserver somit die zu erzeugenden Kontaktinformationen in dem Benutzeradressbuch erzeugt.

5. Verfahren zum Synchronisieren von Kontaktinformationen nach Anspruch 4, wobei die Erzeugungsanforderung ferner die Identifikation des privaten Kanals umfasst; und wobei beim Erzeugen der zu erzeugenden Kontaktinformationen der öffentliche Adressbuchserver ferner die zu erzeugenden Kontaktinformationen mit der Identifikation des privaten Kanals in dem Benutzeradressbuch markiert.

6. Verfahren zum Synchronisieren von Kontaktinformationen nach Anspruch 2 oder 5, ferner umfassend:
Senden einer Datenlöschanforderung zu dem öffentlichen Adressbuchserver durch den privaten Kanal, wobei die Datenlöschanforderung die Benutzeridentifikation und die Identifikation des privaten Kanals umfasst, damit der öffentliche Adressbuchserver somit mit der Identifikation des privaten Kanals markierte Kontaktinformationen in dem Benutzeradressbuch löscht.

7. Verfahren zum Synchronisieren von Kontaktinformationen nach einem der Ansprüche 1 bis 5, das ferner Speichern einer durch den Benutzer registrierten Kontaktliste umfasst; und
das nach dem Empfangen (101) von aktualisierten Kontaktinformationen von einem Unternehmens-Adressbuch ferner Folgendes umfasst:
Bestimmen, ob die aktualisierten Kontaktinformationen einem Kontakt in der Kontaktliste entsprechen; und
Senden der Aktualisierungsanforderung zu dem öffentlichen Adressbuchserver, wenn ja.

8. Unternehmens-Adressbuchagent-Netzwerkelement, wobei das Unternehmens-Adressbuchagent-Netzwerkelement eine einzelne Vorrichtung ist, die sich in einem Unternehmensnetzwerk befindet oder mit einem Unternehmens-Adressbuchserver integriert ist, umfassend:
einen Empfänger (601), ausgelegt zum Empfangen von zu aktualisierenden Kontaktinformationen von dem Unternehmens-Adressbuchserver, wobei der Unternehmens-Adressbuchserver in einem Unternehmensnetzwerk verfügbar ist;
einen Sender (602), ausgelegt zum Senden einer Aktualisierungsanforderung zu einem öffentlichen Adressbuchserver durch einen privaten Kanal mit dem öffentlichen Adressbuchserver, nachdem der Empfänger die zu aktualisierenden Kontaktinformationen empfängt, wobei der öffentliche Adressbuchserver in einem öffentlichen Netzwerk verfügbar ist, wobei die Aktualisierungsanforderung eine Identifikation des privaten Kanals, eine vorgespeicherte Benutzeridentifikation und die zu aktualisierenden Kontaktinformationen umfasst, wobei die Identifikation des privaten Kanals, die durch einen öffentlichen Adressbuchbetreiber vergeben wird, zur Bestimmung einer Quelle der Aktualisierungsanforderung verwendet wird und die Benutzeridentifikation eine Identifikation des Benutzers in dem öffentlichen Adressbuchserver ist, damit der öffentliche Adressbuchserver somit die zu aktualisierenden Kontaktinformationen in einem der Benutzeridentifikation entsprechenden Benutzeradressbuch aktualisiert, um es einem Benutzer in dem öffentlichen Netzwerk zu erlauben, die Kontaktinformationen des Unternehmens-Adressbuchservers von dem öffentlichen Adressbuchserver zu beschaffen.

9. Unternehmens-Adressbuchagent-Netzwerkelement nach Anspruch 8, das ferner einen Speicher (603) umfasst, wobei
der Empfänger (601) ferner ausgelegt ist zum Empfangen einer die Benutzeridentifikation umfassenden Registrieranforderung und zum Empfangen einer von einem Endgerät des Benutzers zurückgegebenen Bestätigungsnachricht;
der Sender (602) ferner ausgelegt ist zum Senden einer Benachrichtigungsnachricht zu dem Endgerät des Benutzers über den öffentlichen Adressbuchserver, nachdem der Empfänger die Registrieranforderung empfängt; und
der Speicher (603) ausgelegt ist zum Speichern der Benutzeridentifikation, nachdem der Empfänger die Bestätigungsnachricht empfängt.

10. Unternehmens-Adressbuchagent-Netzwerkelement nach Anspruch 9, das ferner eine Bestimmungseinheit (604) umfasst; wobei
der Speicher (603) ferner ausgelegt ist zum Speichern einer durch den Benutzer registrierten Kontaktliste;
die Bestimmungseinheit (604) ausgelegt ist zum Bestimmen, ob die zu aktualisierenden Kontaktinformationen einem Kontakt in der durch den Speicher gespeicherten Kontaktliste entsprechen; und
der Sender (602) ausgelegt ist zum Senden der Aktualisierungsanforderung zu dem öffentlichen Adressbuchserver, wenn die Bestimmungseinheit (604) bestimmt, dass die zu aktualisierenden Kontaktinformationen einem Kontakt in der durch den Speicher gespeicherten Kontaktliste entsprechen.

11. Unternehmens-Adressbuchagent-Netzwerkelement nach Anspruch 9, wobei der Sender (602) ferner ausgelegt ist zum Senden einer Erzeugungsanforderung zu dem öffentlichen Adressbuchserver durch den privaten Kanal, nachdem der Speicher die Benutzeridentifikation speichert, wobei die Erzeugungsanforderung die Benutzeridentifikation und zu erzeugenden Kontaktinformationen umfasst, damit der öffentliche Adressbuchserver somit die zu erzeugenden Kontaktinformationen in dem Benutzeradressbuch erzeugt.

12. Unternehmens-Adressbuchagent-Netzwerkelement nach Anspruch 11, wobei die durch den Sender (602) gesendete Erzeugungsanforderung ferner die Identifikation des privaten Kanals umfasst.

13. Unternehmens-Adressbuchagent-Netzwerkelement nach Anspruch 12, wobei der Sender (602) ferner ausgelegt ist zum Senden einer Datenlöschanforderung zu dem öffentlichen Adressbuchserver durch den privaten Kanal, wobei die Datenlöschanforderung die Benutzeridentifikation und die Identifikation des privaten Kanals umfasst, damit der öffentliche Adressbuchserver somit mit der Identifikation des privaten Kanals markierte Kontaktinformationen in dem Benutzeradressbuch löscht.

## Revendications

1. Procédé pour synchroniser des informations de contact, comprenant :
la réception (101), par un élément de réseau d'agent de carnet d'adresses d'entreprise, à partir d'un serveur de carnet d'adresses d'entreprise, d'informations de contact destinées à être mises à jour, dans lequel le serveur de carnet d'adresses d'entreprise et l'élément de réseau d'agent de carnet d'adresses d'entreprise sont situés dans un réseau d'entreprise ;
l'envoi (102), par l'élément de réseau d'agent de carnet d'adresses d'entreprise, d'une demande de mise à jour à un serveur de carnet d'adresses public par l'intermédiaire d'un canal privé avec le serveur de carnet d'adresses public, dans lequel le serveur de carnet d'adresses public est disponible dans un réseau public, dans lequel la demande de mise à jour comprend une identification du canal privé, une identification d'utilisateur pré-stockée et les informations de contact destinées à être mises à jour, dans lequel l'identification du canal privé, qui est attribuée par un opérateur de carnet d'adresses public, est utilisée pour déterminer une source de la demande de mise à jour, et l'identification d'utilisateur est une identification d'un utilisateur dans le serveur de carnet d'adresses public, afin que le serveur de carnet d'adresses public mette à jour les informations de contact destinées à être mises à jour dans un carnet d'adresses d'utilisateur correspondant à l'identification d'utilisateur, afin de permettre à un utilisateur dans le réseau public d'acquérir les informations de contact du serveur de carnet d'adresses d'entreprise à partir du serveur de carnet d'adresses public.

2. Procédé pour synchroniser des informations de contact selon la revendication 1, dans lequel lors de la mise à jour des informations de contact destinées à être mises à jour, le serveur de carnet d'adresses public marque en outre les informations de contact mises à jour avec l'identification du canal privé dans le carnet d'adresses d'utilisateur.

3. Procédé pour synchroniser des informations de contact selon la revendication 1, dans lequel l'identification d'utilisateur est stockée par l'intermédiaire de :
la réception d'une demande d'enregistrement comprenant l'identification d'utilisateur ;
l'envoi d'un message de notification à un terminal de l'utilisateur par l'intermédiaire du serveur de carnet d'adresses public ; et
le stockage de l'identification d'utilisateur si un message d'accusé de réception renvoyé à partir du terminal de l'utilisateur est reçu.

4. Procédé pour synchroniser des informations de contact selon la revendication 3, après que l'identification d'utilisateur est stockée, comprenant en outre :
l'envoi d'une demande de création au serveur de carnet d'adresses public par l'intermédiaire du canal privé, dans lequel la demande de création comprend l'identification d'utilisateur et des informations de contact destinées à être créées, afin que le serveur de carnet d'adresses public crée les informations de contact destinées à être créées dans le carnet d'adresses d'utilisateur.

5. Procédé pour synchroniser des informations de contact selon la revendication 4, dans lequel la demande de création comprend en outre l'identification du canal privé ; et lors de la création des informations de contact destinées à être créées, le serveur de carnet d'adresses public marque en outre les informations de contact destinées à être créées avec l'identification du canal privé dans le carnet d'adresses d'utilisateur.

6. Procédé pour synchroniser des informations de contact selon la revendication 2 ou 5, comprenant en outre :
l'envoi d'une demande de suppression de données au serveur de carnet d'adresses public par l'intermédiaire du canal privé, dans lequel la demande de suppression de données comprend l'identification d'utilisateur et l'identification du canal privé, afin que le serveur de carnet d'adresses public supprime des informations de contact marquées avec l'identification du canal privé dans le carnet d'adresses d'utilisateur.

7. Procédé pour synchroniser des informations de contact selon l'une quelconque des revendications 1 à 5, comprenant en outre le stockage d'une liste de contacts enregistrée par l'utilisateur ; et
après la réception (101) d'informations de contact mises à jour à partir d'un carnet d'adresses d'entreprise, comprenant en outre :
la détermination du fait que les informations de contact mises à jour correspondent, ou ne correspondent pas, à un contact dans la liste de contacts ; et
l'envoi de la demande de mise à jour au serveur de carnet d'adresses public, dans l' affirmative.

8. Élément de réseau d'agent de carnet d'adresses d'entreprise, l'élément de réseau d'agent de carnet d'adresses d'entreprise étant un dispositif individuel situé dans un réseau d'entreprise ou est intégré avec un serveur de carnet d'adresses d'entreprise, comprenant :
un récepteur (601), configuré pour recevoir, à partir du serveur de carnet d'adresses d'entreprise, des informations de contact destinées à être mises à jour, dans lequel le serveur de carnet d'adresses d'entreprise est disponible dans un réseau d'entreprise ;
un transmetteur (602), configuré pour envoyer, après que le récepteur reçoit les informations de contact destinées à être mises à jour, une demande de mise à jour à un serveur de carnet d'adresses public par l'intermédiaire d'un canal privé avec le serveur de carnet d'adresses public, dans lequel le serveur de carnet d'adresses public est disponible dans un réseau public, dans lequel la demande de mise à jour comprend une identification du canal privé, une identification d'utilisateur pré-stockée et les informations de contact destinées à être mises à jour, dans lequel l'identification du canal privé, qui est attribuée par un opérateur de carnet d'adresses public, est utilisée pour déterminer une source de la demande de mise à jour, et l'identification d'utilisateur est une identification de l'utilisateur dans le serveur de carnet d'adresses public, afin que le serveur de carnet d'adresses public mette à jour les informations de contact destinées à être mises à jour dans un carnet d'adresses d'utilisateur correspondant à l'identification d'utilisateur, afin de permettre à un utilisateur dans le réseau public d'acquérir les informations de contact du serveur de carnet d'adresses d'entreprise à partir du serveur de carnet d'adresses public.

9. Élément de réseau d'agent de carnet d'adresses d'entreprise selon la revendication 8, comprenant en outre une mémoire (603), dans lequel
le récepteur (601) est en outre configuré pour recevoir une demande d'enregistrement comprenant l'identification d'utilisateur, et pour recevoir un message d'accusé de réception renvoyé à partir d'un terminal de l'utilisateur ;
le transmetteur (602) est en outre configuré pour envoyer un message de notification au terminal de l'utilisateur par l'intermédiaire du serveur de carnet d'adresses public après que le récepteur reçoit la demande d'enregistrement ; et
la mémoire (603) est configurée pour stocker l'identification d'utilisateur après que le récepteur reçoit le message d'accusé de réception.

10. Élément de réseau d'agent de carnet d'adresses d'entreprise selon la revendication 9, comprenant en outre une unité de détermination (604) ; dans lequel la mémoire (603) est en outre configurée pour stocker une liste de contacts enregistrée par l'utilisateur ;
l'unité de détermination (604) est configurée pour déterminer le fait que les informations de contact destinées à être mises à jour correspondent, ou ne correspondent pas, à un contact dans la liste de contacts stockée par la mémoire ; et le transmetteur (602) est configuré pour envoyer la demande de mise à jour au serveur de carnet d'adresses public lorsque l'unité de détermination (604) détermine que les informations de contact destinées à être mises à jour correspondent à un contact dans la liste de contacts stockée par la mémoire.

11. Élément de réseau d'agent de carnet d'adresses d'entreprise selon la revendication 9, dans lequel le transmetteur (602) est en outre configuré pour envoyer, après que la mémoire stocke l'identification d'utilisateur, une demande de création au serveur de carnet d'adresses public par l'intermédiaire du canal privé, la demande de création comprenant l'identification d'utilisateur et des informations de contact destinées à être créées, afin que le serveur de carnet d'adresses public crée les informations de contact destinées à être créées dans le carnet d'adresses d'utilisateur.

12. Élément de réseau d'agent de carnet d'adresses d'entreprise selon la revendication 11, dans lequel la demande de création envoyée par le transmetteur (602) comprend en outre l'identification du canal privé.

13. Élément de réseau d'agent de carnet d'adresses d'entreprise selon la revendication 12, dans lequel le transmetteur (602) est en outre configuré pour envoyer une demande de suppression de données au serveur de carnet d'adresses public par l'intermédiaire du canal privé, la demande de suppression de données comprenant l'identification d'utilisateur et l'identification du canal privé, afin que le serveur de carnet d'adresses public supprime des informations de contact marquées avec l'identification du canal privé dans le carnet d'adresses d'utilisateur.
